# EUROPEAN PATENT APPLICATION

(11) **EP 4 742 091 A1**
(43) Date of publication of application: **13.05.2026**
(21) Application number: 24211184.7
(22) Date of filing: 06.11.2024
(51) Int. Cl.: G06K 19/07, G06K 19/077, H04B 5/77

(54) **DUAL COMMUNICATION FREQUENCY RFID CIRCUIT**

(71) Applicant: EM Microelectronic-Marin SA, 2074 Marin (CH)
(72) Inventor: MULLER, Pierre, 2074 Marin-Epagnier (CH)
(74) Representative: ICB SA

(57) **Abstract**

The present invention concerns a dual communication frequency RFID circuit (10) comprising:
- a first logic unit (13) for processing data signals received or transmitted by a first frequency by a first antenna (11),
- a second logic unit (14) for processing data signals received or transmitted by a second frequency by a second antenna (12),
- a shared memory unit (15) connected to the first logic unit (13) and connected to the second logic unit (14) and comprising a shared password storage section (20) accessible by the first logic unit (13) and by the second logic unit (14).

## Description

### Field of the invention

The present invention relates to the field of dual communication frequency RFID circuits and in particular to the memory management of such dual communication frequency RFID circuit. In further aspects, the present invention relates to an RFID Tag and to a method of operating and electronic RFID circuit.

### Background of the invention

RFID tags are widely used and may be attached to various items or goods in order to identify such items uniquely and enable to automatize business processes handling of such items, for instance in the fields of shipping and receiving goods or in the field of performing inventory of goods in shops or warehouses.

A RFID tag is typically made of an integrated circuit (IC) and an antenna (typically copper or aluminum) that are connected via a conductive glue and associated to a substrate (typically PET or paper).

Some additional information might be programmed in the tag, like expiration date for the product, manufacturing information or any relevant information to the product or tags manufacturing or usage. This information is stored in the IC memory. Access to the IC memory might be protected by password to prevent illegitimate access.

Different types of tags are existing, supporting different standard and business requirements. Two types of existing tags are UHF RFID tags, also known as RAIN RFID, and supporting ISO18000-63 protocol and HF tags, also known as NFC tags and supporting either ISO14443 or ISO15693 protocols. All of these protocols specify options for the tags to implement access passwords to protect memory content access as describes above.

UHF tags are typically used for process automation like logistic and supply chain management applications, while HF and NFC tags typically used for customer interaction, like for instance ticketing, access control, payment and customer engagement. The existing communication standards also specify some additional password to support "killing" or "destroying" the tag, which results in the tag becoming being non-responsive to any further commands and becoming effectively non usable.

Due to the different business targets of the two types of communication interfaces, some applications benefit from combining both to enable process automation as well as consumer interaction. This results in having two unique identifiers associated to a single product.

Both types, namely HF type and UHF type interfaces may be already provided in a common IC. One of the key characteristics of this product family is to share the IC memory between both interfaces. This enables new or simplified business use cases by enabling for instance a unique ID for the product whether access from the UHF or the HF interface.

However, the correctly management of passwords is at best a difficult thing to do. Passwords might be required to be accessible in different location and IT systems and associated to the actual product. Password diversification, which is a best practice in security, further increases the difficulty to associate password and the real product as each individual product item is having a specific password. In practice, this leads to complex IT systems which need to maintain the consistency of password to product association, provide password access to the legitimate product users while denying access to anybody else. Consistency on product programming must be maintained over both communication interfaces, while the tags might be encoded at different stages of the manufacturing process and with different equipment.

Having a product that implements two types of communication interfaces increases the complexity of maintaining this association to four different items: the unique ID of each IC (UHF and HF) and the two access passwords. The problem further increases with the inclusion of the kill password.

It is therefore desirable to provide improvements to the password management of dual communication frequency RFID circuit by way of which access and processing of such passwords as well as management of such passwords can be simplified while simultaneously providing the generic functions associated to such passwords.

### Summary of the invention

In one aspect the present invention relates to a dual communication frequency RFID circuit. The RFID circuit comprises a first logic unit for processing data signals received or transmitted by a first frequency and by a first antenna. The RFID circuit further comprises a second logic unit for processing data signals received or transmitted by a second frequency and hence by a second antenna. The first frequency and the second frequency distinguish from each other. Accordingly, the first antenna and the second antenna for transmission of data signals at different, nonoverlapping frequencies or frequency ranges. The antennas are particularly configured for transceiving data signals at different carrier frequencies.

The dual communication frequency RFID circuit further comprises a shared memory unit, which is connected to the first logic unit and which is connected to the second logic unit. The shared memory unit comprises a shared password storage section, which is accessible by the first logic unit and by the second logic unit. By providing a shared password storage section in the shared memory unit both logic units, namely, the first logic unit and the second logic unit, may access one and the same passwords or password types for providing or denying access to password-protected storage sections in the shared memory unit and/or to provide a common kill or destroy password by way of which the operation of a respective logic unit can be interrupted or disabled.

By way of the shared password storage section and hence by providing a common password storage section in the shared memory unit, which is accessible to both of the first logic unit and the second logic unit, the overall complexity of password handling and password management can be simplified.

By way of a simplified password management, a consistency of the passwords from either interface can be guaranteed. Moreover, the shared memory with the shared password storage section may also allow to simplify the production process for the dual communication frequency RFID circuit since only one access password or login password and only one kill password or destroy password need to be encoded in the shared memory unit.

According to a further example the shared password storage section comprises a first memory block to store at least one of an access password and a login password. By way of an access password or login password there can be controlled a legitimate access to certain password-protected storage sections of the shared memory unit. Only data signals provided with the respective access password or login password will be processable to access password-protected storage sections of the shared memory unit in the course of processing data signals received or transmitted by the first or second frequencies and by the first or second antennas, respectively.

According to a further example the first memory block is accessible by the first logic unit and by the second logic unit. The first memory block of the shared password storage section may be configured to store only one of an access password and a login password. In some examples and when the respective password is accessed and/or read by the first logic unit it may be interpreted as an access password. When read or accessed by the second logic unit it may be read or interpreted as a login password.

Specifically, the first memory block of the shared password storage section of the shared memory unit may be operable to store only one, namely a common authentication password, which when processed or accessed by the first logic unit may provide the function of an access password according to the UHF protocol. When the authentication password as stored in the first memory block of the shared password storage section is accessed or read by the second logic unit it may be interpreted or handled as a login password according to the NFC communication protocol.

According to a further example a predefined memory area of the shared memory unit gets accessible for the first logic unit upon processing data from the first memory block of the password storage section. Here, the authentication password as stored in the first memory block of the shared password storage section may be processed by the first logic unit by way of which further memory areas, e.g. a first predefined memory area of the shared memory unit, gets accessible for the first logic unit for further data processing, e.g., for reading or writing of information or data stored in a respective first predefined memory area of the shared memory unit.

Likewise, a second predefined memory area of the shared memory unit may become accessible for the second logic unit upon processing data from the first memory block of the shared password storage section. Here, and when the second logic unit accesses the first memory block of the shared password storage section another memory area, hence a second predefined memory area of the shared memory unit may become accessible for the second logic unit, thereby allowing to read data that is processable by the second logic unit, e.g., data which is stored in the shared memory unit and which is configured for reading or writing in accordance to the NFC communication protocol.

According to a further example the password storage section comprises a second memory block to store at least one of a kill password and a destroy password.

Here, and in some examples the second memory block of the shared password storage section may be configured to store only one termination password, which when accessed or read by the first logic unit, e.g., by a UHF logic unit, may be interpreted or may operate as a kill password in accordance to the UHF protocol. The termination password as stored in the second memory block of the shared password storage section may be interpreted or may deploy the function of a destroy password in accordance to the NFC protocol, e.g., when processed by the second logic unit.

In both cases, the second memory block of the shared password storage section may be configured to store only one termination password, which will be differently or substantially equally treated or used by the first logic unit and by the second logic unit, e.g., to terminate or to deactivate operation of the respective first logic unit and/or of the second logic unit.

Hence, when the first logic unit or the second logic unit processes the termination password as accessible from the second memory block of the shared password storage section, the respective first logic unit or second logic unit becomes inoperable to process further data signals received by the first or second antenna, respectively.

According to a further example the second memory block of the shared password storage section is accessible by the first logic unit and by the second logic unit. Here, both, the first logic unit and the second logic unit may have access to the second memory block in order to read or to obtain the termination password from the shared password storage section of the shared memory unit of the RFID circuit. In this way, the overall password handling for the two logic units of one and the same integrated RFID circuit can be simplified.

According to a further example of the RFID circuit and when processing data from the second memory block the first logic unit becomes non-responsive to any subsequent data signal. Here and when the first logic unit reads or processes the termination password from the second memory block of the shared password storage section and when the first logic unit processes such termination password the first logic unit becomes non-responsive to any subsequent data signal after having processed the termination password. Here and with the first logic unit the termination password may be treated as a kill password in accordance to the UHF data processing or communication protocol.

According to a further example and when processing data from the second memory block the second logic unit becomes non-responsive to any subsequent data signal. Also here, the second logic unit is operable to access and/or to read and/or to process the termination password from the second memory block of the shared password storage section. In response to the processing of the termination password as obtained from the second memory block of the shared password storage section, the second logic unit becomes non-responsive to any subsequent data signal. Hence, the second logic unit becomes effectively inoperable or silent.

The processing of the termination password from the second memory block of the shared password storage section may be comparable to the processing of a destroy password in accordance to the HF processing and/or communication protocol.

According to a further example of the RFID circuit the first logic unit is a UHF logic unit and the first antenna is a UHF antenna. Accordingly, the first logic unit and the first antenna are operable to communicate with external electronic devices, e.g. with RFID readers in accordance to the UHF communication protocol.

According to a further example the second logic unit is a NFC logic unit and the second antenna is a NFC antenna. Likewise, the second logic unit and the second antenna are operable to communicate with external electronic devices pursuant the NFC protocol.

According to another example the first logic unit, the second logic unit and the shared memory are integrated in a common integrated circuit. This way, there is provided a single dual communication frequency RFID circuit comprising first and second logic units both accessing a shared memory unit with a shared password storage section. In this way the complexity of the password management can be reduced to only two passwords, one of which being stored in the shared password storage section as an authentication password and which according to the UHF or NFC protocol is handled or treated as one of an access password and a login password.

The second memory block of the shared password storage section is particularly configured to store a termination password, which may be interpreted or handled by the UHF a protocol as a kill password and which may be interpreted, handled or treated by the NFC protocol as a destroy password.

According to a further aspect the present invention also relates to a dual frequency RFID tag. The dual frequency RFID tag comprises a first antenna to receive and/or to transmit data signals at a first frequency. The dual frequency RFID tag further comprises a second antenna to receive and/or to transmit data signals at a second frequency. The dual frequency RFID tag further comprises a RFID circuit as described above, wherein the first logic unit of the RFID circuit is connected to the first antenna and wherein the second logic unit of the RFID circuit is connected to the second antenna.

In some examples the first logic unit comprises or constitutes a first transceiver of the dual communication frequency RFID circuit and the second logic unit comprises or constitutes a second transceiver connected to the second antenna. Since the dual frequency RFID tag comprises a RFID circuit as described above, all features, effects and benefits as described above in connection with the dual communication frequency RFID circuit equally apply to the dual frequency RFID tag; and vice versa.

According to another aspect the present disclosure further relates to a method of operating a RFID circuit as described above, namely to a dual communication frequency RFID circuit comprising a first logic unit for processing data signals received or transmitted by a first frequency and by a first antenna, a second logic unit for processing data signals received or transmitted by a second frequency and by a second antenna as well as a shared memory unit connected to the first logic unit and connected to the second logic unit. The shared memory unit comprises a shared password storage section, which is accessible by the first logic unit and by the second logic unit, respectively.

The method of operating the dual communication frequency RFID circuit comprises the steps of reading of at least one of an access password and a login password, hence reading of at least an authentication password from the password storage section of the shared memory unit by one of the first logic unit and the second logic unit. The method further comprises the step of processing of at least one of the access password and the login password, namely processing of the password that has been read or obtained from the password storage section of the shared memory unit. Thereafter and in a further step the method comprises the step of accessing a predefined storage area in response to the processing of at least one of the access password and the login password.

By way of the access password and/or the login password, hence by way of processing the respective authentication password, which may be either the access password or the login password, a predefined storage area of the shared memory unit becomes accessible for the respective first logic unit or second logic unit.

In another aspect the present disclosure also relates to a method of operating a RFID circuit as described above, wherein the method comprises the steps of reading of at least one of a kill password and a destroy password, hence reading of a termination password, which may be the kill password and/or the destroy password. The kill password or destroy password and hence the termination password is readable and/or read from the password storage section of the shared memory unit by one of the first logic unit and the second logic unit.

The method further comprises the step of processing of at least one of the kill password and the destroy password and the method further comprises the step of switching at least one of the first logic unit and the second logic unit into an inactive or non-responsive state in response to the processing of at least one of the kill password and the destroy password. Accordingly, and in some examples the first logic unit may become inactive or non-responsive after having processed the kill password.

The second logic unit may become inactive or non-responsive in response to data signals after having processed the destroy password.

The kill password and the destroy password maybe identical. They may be interpreted substantially equally or differently by the first and the second logic units when accessed in the shared password storage section of the shared memory unit.

According to a further example the method of reading of at least one of the kill password and the destroy password, processing of the respective kill password and the destroy password as well as switching of the first logic unit and the second logic unit into an inactive or non-responsive state may be provided in addition to the reading of at least one of the access password and the login password and the processing of at least one of the access password and the login password as well as the subsequent accessing of predefined storage areas in response to the processing of at least one of the access password and the login password as described above.

Generally, the methods as described herein are processable or executable by a dual communication frequency RFID circuit and hence by a dual frequency RFID tag as described above. Insofar, all features, effects and benefits as described above in connection with the dual communication frequency RFID circuit and/or in connection with the dual frequency RFID tag equally apply to the method of operating the RFID circuit or RFID Tag; and the vice versa.

### Brief description of the drawings

In the following numerous examples of the invention will be described in greater detail by making reference to the drawings, in which:
- Fig. 1 schematically illustrates a hardware implementation of the dual communication frequency RFID tag,
- Fig. 2 is a block diagram of the dual communication frequency RFID circuit and
- Fig. 3 is a block diagram of the shared memory unit of the dual communication RFID circuit.

### Detailed description of the invention

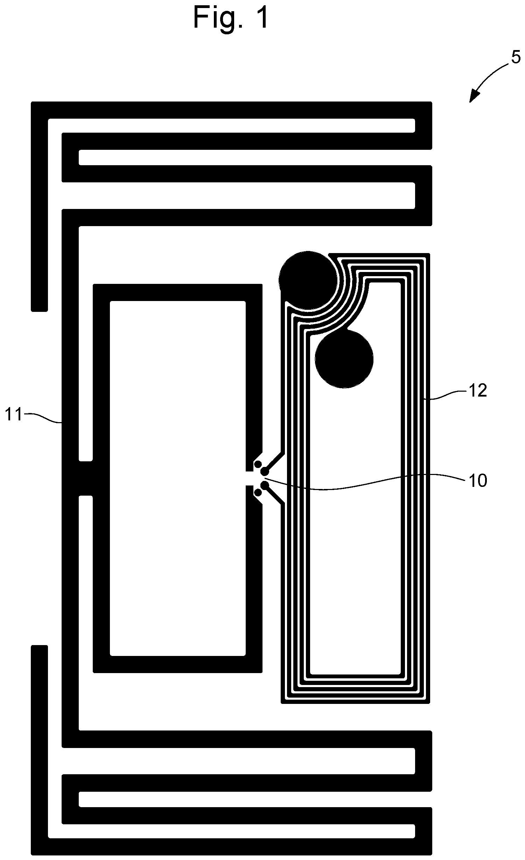

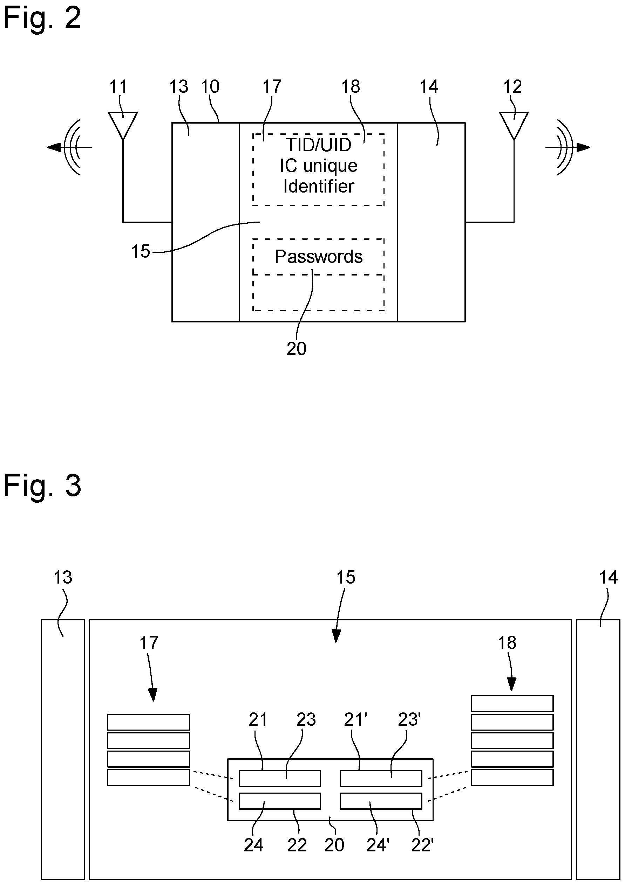

As it is particularly illustrated in Figs. 1 and 2 there is provided a dual communication frequency RFID the circuit 10, which forms part of a dual frequency RFID tag 5. The dual frequency RFID tag 5 comprises a first antenna 11 and a second antenna 12, which are both connected and hence coupled in a signal transmitting manner to the common dual communication frequency RFID circuit 10. In the present example the first antenna 11 is implemented at as a UHF antenna. The second antenna 12 is implemented as a NFC antenna.

As particularly indicated in Fig. 2 the first antenna 11 is connected to a first logic unit 13. The first logic unit 13 may comprise a first transceiver, which is implemented as a UHF transceiver. Hence, the first logic unit is a UHF logic unit operable to process UHF data signals.

The second antenna 12 is connected and/or coupled to a second logic unit 14. The second logic unit 14 is configured for processing data signals received or transmitted by a second frequency by the second antenna 12. The second antenna 12 is implemented as a HF antenna. It may be particularly implemented as a NFC antenna. The second antenna 12 and the second logic unit 14, e.g. implemented as a second transceiver, are implemented as NFC components in order to process data signals in accordance to the NFC protocol.

As further indicated in Figs. 2 and 3, both, the first logic unit 13 and the second logic unit 14 have access to a shared memory unit 15. The shared memory unit 15 is accessible by both, namely by the first logic unit 13 and by the second logic unit 14. The shared memory unit 15 comprises a first predefined memory area 17 and a second predefined memory area 18. In the first memory area 17 there may be stored or provided data which is readable or writable and hence processable by the first logic unit 13.

Accordingly, the data stored in the first predefined memory area 17 may be used to conduct UHF-based communication with an external electronic device. Accordingly, the second predefined memory area 18 is accessible by the second logic unit 14. It may include data and respective memory parts that are used or usable by the second logic unit to implement communication with an external electronic device under the NFC protocol.

Accordingly, the first predefined memory area 17 may include memory blocks operable to store data or information, such as a tag ID a unique identifier of the tag or RFID circuit 10. The memory area 17 may be further configured to store an electronic product code, a user as well as to provide reserved storage area, e.g. for some specific data.

The second memory area 18 may comprise memory blocks to store a unique identifier, to store a lock bit, a memory flag, to store a capability container, to store data and/or or to provide unspecific and preserved memory space.

The shared memory unit 15 further comprises a shared password storage section 20, which is a storage area of the shared memory unit 15 that is explicitly and exclusively usable to store passwords, such as authentication passwords and/or termination password usable and/or accessible by both, the first logic unit 13 and by the second logic unit 14, respectively.

As schematically illustrated in Fig. 3, the shared password storage section 20 comprises a first memory block 21 and a second memory block 22. The first memory block 21 is configured to store an authentication password 23. The second memory block 22 is configured to store a termination password 24. Both, the first logic unit 13 and the second logic unit 14 have access to the shared password storage section 20 and hence to the first memory block 21 and to the second memory block 22, respectively.

When reading data from the first memory block 21 by the first logic unit 13, the respective authentication password 23 may be interpreted or used as an access password by the UFC-based first logic unit 13. When accessing the termination password 24 from the second memory block 22, the first logic unit 13 interprets such termination password 24 as a kill password in accordance to the UHF communication or data processing protocol.

In a similar manner also the second logic unit 14 has access to the shared password storage section 20. It is operable to read the data from the first memory block 21' and from the second memory block 22'. The memory blocks 21, 21' may be implemented identically and may physically overlap. Likewise, also the memory blocks 22, 22' may be implemented identically and may physically overlap.

When reading an authentication password from the first memory block 21' the respective authentication password 23' may be interpreted as a login password by the NFC protocol of the second logic unit 14. When reading the termination password 24' from the second memory block 22' such termination password 24' may be interpreted as or may deploy the function of a destroy password under the NFC protocol.

In effect and by providing one and the same shared password storage section 20 in the shared memory unit 15 of the dual communication frequency RFID circuit 10, the overall handling and management of the authentication password and termination password can be simplified.

There can be provided a consistency of password management from either logic unit 13, 14 and hence from either transceiving interface connected to the first antenna 11 or second antenna 12, respectively. Moreover, and by sharing the password management with or on the basis of a shared password storage section 20 also the production process and production costs for implementing the dual communication frequency RFID circuit 10 can be reduced as only one authentication password and only one termination password needs to be encoded with the RFID circuit.

### Nomenclature

- 5: RFID tag
- 10: integrated circuit
- 11: antenna
- 12: antenna
- 13: logic unit
- 14: logic unit
- 15: shared memory
- 17: memory area
- 18: memory area
- 20: storage section
- 21: memory block
- 22: memory block
- 23: password
- 24: password

## Claims

1. A dual communication frequency RFID circuit (10) comprising:
- a first logic unit (13) for processing data signals received or transmitted by a first frequency by a first antenna (11),
- a second logic unit (14) for processing data signals received or transmitted by a second frequency by a second antenna (12),
- a shared memory unit (15) connected to the first logic unit (13) and connected to the second logic unit (14) and comprising a shared password storage section (20) accessible by the first logic unit (13) and by the second logic unit (14).

2. The RFID circuit (10) according to claim 1, wherein the shared password storage section (20) comprises a first memory block (21) to store at least one of an access password (23) and a login password (23').

3. The RFID circuit (10) according to claim 2, wherein the first memory block (21) is accessible by the first logic unit (13) and by the second logic unit (14).

4. The RFID circuit (10) according to claim 3, wherein a first predefined memory area (17) of the shared memory unit (15) gets accessible for the first logic unit (13) upon processing data from first memory block (21) of the password storage section (20).

5. The RFID circuit (10) according to claim 3 or 4, wherein a second predefined memory area (18) of the shared memory unit (15) gets accessible for the second logic unit (14) upon processing data from first memory block (21) of the password storage section (20).

6. The RFID circuit (10) according to any one of the preceding claims, wherein the shared password storage section (20) comprises a second memory block (22) to store at least one of a kill password (24) and a destroy password (24').

7. The RFID circuit (10) according to claim 6, wherein the second memory block (22) is accessible by the first logic unit (13) and by the second logic unit (14).

8. The RFID circuit (10) according to any one of the preceding claims 6 or 7, wherein when processing data from the second memory block (22), the first logic unit (13) becomes non-responsive to any subsequent data signal.

9. The RFID circuit (10) according to any one of the preceding claims 6 to 8, wherein when processing data from the second memory block (22), the second logic unit (14) becomes non-responsive to any subsequent data signal.

10. The RFID circuit (10) according to any one of the preceding claims, wherein the first logic unit (13) is a UHF logic unit and wherein the first antenna (11) is a UHF antenna.

11. The RFID circuit (10) according to any one of the preceding claims, wherein the second logic unit (14) is a NFC logic unit and wherein the second antenna (12) is a NFC antenna.

12. The RFID circuit (10) according to any one of the preceding claims, wherein the first logic unit (13), the second logic unit (14) and the shared memory (15) are integrated in a common integrated circuit.

13. A dual frequency RFID tag (5) comprising:
- a first antenna (11) to receive and/or to transmit data signals at a first frequency,
- a second antenna (12) to receive and/or to transmit data signals at a second frequency, and
- a RFID circuit (10) according to any one of the preceding claims, wherein the first logic unit (13) of the RFID circuit (10) is connected to the first antenna (11) and wherein the second logic unit (14) of the RFID circuit (10) is connected to the second antenna (12).

14. A method of operating a RFID circuit (10) according to any one of the preceding claims, 1 to 12, comprising the steps of:
- reading of at least one of an access password (23) and a login password (23') from the password storage section (20) of the shared memory unit (15) by one of the first logic unit (13) and the second logic unit (14),
- processing of at least one of the access password (23) and the logon password (23') and
- accessing a predefined storage area (17, 18) in response to the processing of at least one of the access password (23) and the login password (23').

15. The method according to claim 14, further comprising the steps of:
- reading of at least one of a kill password (24) and a destroy password (24') from the password storage section (20) of the shared memory unit (15) by one of the first logic unit (13) and the second logic unit (14),
- processing of at least one of the kill password (24) and the destroy password (24') and
- switching at least one of the first logic unit (13) and the second logic unit (14) into an inactive or non-responsive state in response to the processing of at least one of the kill password (24) and the destroy password (24').
